# EUROPÄISCHE PATENTSCHRIFT

(11) **EP 2 009 194 B1**
(45) Veröffentlichungstag und Bekanntmachung des Hinweises auf die Patenterteilung: **26.06.2013**
(21) Anmeldenummer: 07024314.2
(22) Anmeldetag: 14.12.2007
(51) Int. Cl.: E04F 13/06, E04B 1/76, B29C 47/02

(54) **Eckwinkel zur Kantenbewehrung und Verfahren zu seiner Herstellung**
Corner bead for reinforcing edges and method for its production
Cornière pour renforcer les angles et son procédé de fabrication

(30) Priorität: 28.06.2007 EP 07012736
(43) Veröffentlichungstag der Anmeldung: 31.12.2008
(73) Patentinhaber: Weroform GmbH, 74523 Schwäbisch Hall-Sulzdorf (DE)
(72) Erfinder: Becker, Silvan, 74535 Mainhardt (DE); Becker, Andreas, 74535 Mainhardt (DE); Linder, Harald, 86720 Nördlingen (DE)
(74) Vertreter: Wunderlich, Rainer

(56) Entgegenhaltungen:
- EP-A- 0 789 115
- EP-A- 0 915 215
- EP-A2- 1 514 978
- DE-A1- 2 641 585
- DE-A1- 3 430 614
- DE-A1- 10 060 619
- DE-A1- 19 611 468
- DE-A1- 19 652 877
- DE-U1- 20 314 023
- DE-U1-202006 015 852
- GB-A- 2 292 582

## Beschreibung

Die Erfindung betrifft einen Eckwinkel zur Kantenbewehrung mit einem Winkelprofil mit zwei Schenkeln und mit mindestens einer Gewebematte, die mit dem Winkelprofil verbunden ist und über dessen Schenkel hinausragt.

Die Erfindung betrifft weiterhin ein Verfahren zur Herstellung eines Eckwinkels, bei dem ein Winkelprofil mit zwei Schenkeln mit mindestens einer Gewebematte verbunden wird.

Derartige Eckwinkel sind seit langem bekannt und dienen der Bewehrung einer den Sichtputz tragenden Mauerecke. Der Sichtputz kann dabei auf die äußere Wärmedämmschicht oder unmittelbar auf die gemauerten oder betonierten Gebäudewände aufgebracht werden. Um möglichst gerade und stoßgeschützte Ecken zu erhalten, werden Eckwinkel in den Eckbereichen an der äußeren Mauer- oder Wärmedämmschicht angeordnet und mit in den Putz eingearbeitet. Bekannte Eckwinkel weisen ein Winkelprofil auf, dessen Schenkel im Wesentlichen einen Winkel von 90° einschließen. An dem Winkelprofil ist ein Gewebestreifen befestigt, der über die freien Längskanten der Schenkel hinausragt, um so den Anschluss an eine großflächige Putzbewehrung zu vermitteln.

Bei bekannten Eckwinkeln ist das Gewebe meist durch Verkleben an dem Winkelprofil angebracht. Die EP-A-0 915 215 beschreibt einen Eckwinkel, bei dem ein Gewebestreifen durch eine anextrudierte Abzugsleiste an dem Winkelprofil befestigt ist.

Eckwinkel sind in eingebautem Zustand großen Spannungen ausgesetzt. Bekannte Eckwinkel, die eine präzise und sichere Eckgestaltung ermöglichen, sind relativ aufwändig hinsichtlich Aufbau und Herstellung.

Die GB 2 292 582 A beschreibt einen Eckwinkel mit einem Winkelprofil und einer außen an dem Winkelprofil angeordneten Gewebematte. Im Bereich einer Ecke des Winkelprofils ist außen eine Schutzkappe befestigt, so dass die Gewebematte in diesem Bereich zwischen dem Winkelprofil und der Schutzkappe angeordnet ist.

Die DE 100 60 619 A1 offenbart eine Profilleiste zum Verputzen eines Mauer- oder Wandabschnittes oder einer Isolierschicht. An der Profilleiste kann ein Armierungsgewebeabschnitt dadurch befestigt sein, dass der Armierungsgewebeabschnitt zwischen einem auf den Grundkörper der Profilleiste aufgeclipsten Deckprofil und dem Grundkörper eingeklemmt ist.

Die DE 34 30 614 A1 offenbart eine Eckbewehrung mit einem Bewehrungs-Gewebestreifen und einen oder zwei weiteren Gewebestreifen als Eckverstärkung.

Aus der DE 20 2006 015 852 U1 ist ein Eckprofil mit einer Profilleiste und einem innen an der Profilleiste angeordneten Gittergewebestreifen bekannt. Der Gittergewebestreifen ist mit einem formstabil aushärtbaren Material an der Profilleiste befestigt.

In der DE 203 14 023 U1 ist ein Einputzwinkel mit einer Gewebeschicht und einer auf die Gewebeschicht aufextrudierten Eckleiste beschrieben.

Die DE 196 52 877 A1 offenbart eine Eckleiste mit zwei Schenkeln und einem Einbettungsgewebe, das mit den Innenseiten der Schenkel durch Kleben, Schweißen oder ähnliche Verfahren verbunden ist.

Die EP 0 789 115 A1 offenbart einen Eckschutzwinkel mit aufeinander stehenden Profilschenkeln und mit einer Bewehrungsmatte, die mit den Innenseiten der Profilschenkel verbunden ist. Die Bewehrungsmatte und die Profilschenkel sind miteinander verschweißt.

Aus der DE 26 41 585 ist eine Schutz-Führungsleiste für Mauerecken bekannt, bei welcher ein Netz in den Kunststoff der Schenkel eingepresst ist.

Die EP 1 514 978 A2 offenbart einen Einputzwinkel mit einem als Eckleiste ausgebildeten Profil und einer Gewebeschicht. Das Profil ist beidseits auf die Gewebeschicht aufextrudiert.

Eine Anschlussleiste zur Verbindung eines Bewehrungs-Gewebes einer Spachtelkleberschicht mit einem Tür- oder Fensterrahmen ist in der DE 196 11 468 A1 offenbart.

Es ist daher die **Aufgabe** der vorliegenden Erfindung, einen Eckwinkel zu schaffen, der bei einfacher Herstellung eine möglichst stabile Eckbewehrung und präzise Eckgestaltung ermöglicht. Eine weitere Aufgabe der Erfindung ist es, ein Verfahren zur Herstellung eines solchen Eckwinkels anzugeben.

Die Aufgabe wird dadurch gelöst, dass der Eckwinkel die Merkmale des beigefügten Anspruchs 1 zeigt.

Die Erfindung beruht auf der Erkenntnis, dass es für eine möglichst stabile und zuverlässige Eckbewehrung förderlich ist, wenn der Eckwinkel selbst stabil aufgebaut ist und insbesondere den in der Putzschicht auftretenden Spannungen standhält.

Ein Grundgedanke der Erfindung kann darin gesehen werden, eine besonders innige Verbindung der Gewebematte mit einer unterhalb des Eckwinkels liegenden Materialschicht zu ermöglichen. Die Materialschicht kann beispielsweise aus einem Kleber oder einem Mörtel bestehen, mit dem der Eckwinkel auf der äußeren Wärmedämmschicht eines Mauerwerks befestigt wird. Durch die innige Verbindung der Gewebematte mit der äußeren Materialschicht kann der Eckwinkel besonders zuverlässig an einer Ecke festgelegt werden.

Ein weiterer Grundgedanke der Erfindung kann darin gesehen werden, dass durch die innenseitige Anordnung der Gewebematte eine verbesserte Verbindung der Gewebematte zu den sich anschließenden großflächigen Bewehrungsmatten erreicht werden kann. Die großflächigen Bewehrungsmatten, welche ebenfalls auf der äußeren Materialschicht einer Wand angeordnet werden, können so bis direkt an die Längskanten des Winkelprofils heranreichen und mit der Gewebematte großflächig überlappen.

Aufgrund der innenseitig am Winkelprofil angeordneten Gewebematte wird diese durch Spannungen innerhalb einer auf den Eckwinkel aufzubringenden Putzschicht nicht von dem Winkelprofil gelöst. Derartige Spannungen treten auf, da die äußere Putzschicht großen Temperatur- und Witterungsschwankungen ausgesetzt ist. Außerdem entstehen an der Putzschicht enorme Druck- und Sogkräfte durch Windlasten, welche ein Ablösen der Gewebematte von dem Winkelprofil hervorrufen können. Die innenseitige Anordnung der Gewebematte am Winkelprofil bewirkt in vorteilhafter Weise, dass die Gewebematte vor derartigen Spannungen und Kräften weitgehend geschützt ist.

Außerhalb des Bereichs des Winkelprofils ist es bevorzugt, dass die Gewebematte beabstandet zur Wand in der Putzschicht eingebettet ist. Hierzu ist gemäß einer bevorzugten Ausführungsform der Erfindung vorgesehen, dass mindestens ein Schenkel mindestens eine Abknickung oder Abbiegung aufweist. Diese kann auch als Absatz ausgebildet sein. Dabei ist es bevorzugt, dass die Abknickung oder Abbiegung parallel zu einem Eckbereich der beiden Schenkel verläuft und derart ausgebildet ist, dass sie in Richtung zu den Schenkelenden hin nach außen weist. Hierdurch wird die Gewebematte aus einem inneren Bereich der Putzschicht in einen äußeren Bereich geführt. Im Putz auftretende Zug-, Schub- und Scherkräfte können so deutlich besser aufgenommen werden. Die Abknickung oder Abbiegung ist bevorzugt derart aufgebaut, dass die Gewebematte im eingebauten Zustand in ein äußeres beziehungsweise oberes Drittel der Putzschicht geführt wird.

Gemäß der Erfindung ist die Gewebematte nicht freiliegend außen, sondern geschützt innen am Winkelprofil angeordnet. Hierdurch ist sie während eines Verputzvorganges davor geschützt, durch die während des Verputzens auftretenden Schubkräfte von dem Winkelprofil gelöst zu werden. Eine Beschädigung oder eine Schwächung der Gewebematte kann vermieden werden.

Der erfindungsgemäßen Eckwinkel erlaubt es, auf vergleichsweise einfache Weise beim Verputzen eine präzise und definierte Außenecke, z.B. von 90°, herzustellen. Durch die innenseitige Anordnung der Gewebematte ist die äußere Kante des Eckwinkels frei von jeglicher Beeinträchtigung durch die Gewebematte. Die Kante des Eckwinkels ist somit besonders glatt und ermöglicht hierdurch die Gestaltung einer präzisen und glatten Außenecke mit einem geradlinigen Kantenverlauf.

Für ein verbessertes Anlegen des Eckwinkels an eine Ecke oder Kante ist vorgesehen, dass im Eckbereich des Winkelprofils ein Aufnahmeraum zur Aufnahme eines Teils der Gewebematte ausgebildet ist. Dieser ist zur Innenseite des Winkelprofils hin offen und gemäß einer bevorzugten Ausführungsform etwa U-förmig ausgebildet. Die Gewebematte wird durch diese Öffnung schlaufenartig durch den U-förmigen Aufnahmeraum geführt. Hierdurch wird eine offene Innenkante des Winkelprofils erreicht. Insbesondere wird ein Abrunden der Innenkante des Winkelprofils durch die Gewebematte verhindert. Der Eckwinkel kann somit auch an eine scharfkantige Ecke oder Kante sicher angelegt werden. Der Aufnahmeraum ist besonders in Verbindung mit einer weniger flexiblen Gewebematte geeignet.

Besonders zweckmäßig ist es, dass der Aufnahmeraum in einer Auswölbung angeordnet ist, welche als Abzugskante ausgebildet ist. Eine solche an sich bekannte Abzugskante für eine auf den Eckwinkel aufzubringende Putzschicht dient insbesondere dazu, eine definierte geradlinige Kante bzw. Ecke herzustellen. Zusätzlich gewährleistet die Abzugskante einen verbesserten Stoßschutz. Durch die Anordnung des Aufnahmeraums innerhalb der Abzugskante werden zwei Elemente des Eckwinkels sinnvoll kombiniert. Grundsätzlich kann die Form der Auswölbung beliebig gewählt werden. Besonders bevorzugt ist es jedoch, dass die Auswölbung eine etwa U-förmige Außenkontur aufweist, die der gewünschten Form der Ecke entspricht.

Die Stabilität des erfindungsgemäßen Eckwinkels wird dadurch verbessert, dass der Aufnahmeraum zur Fixierung der Gewebematte mindestens einen Vorsprung aufweist. Durch Witterungs- oder Temperaturschwankungen können nicht nur in der Putzschicht, sondern auch in der Gebäudeecke Spannungen auftreten. Diese können auf die Gewebematte übertragen werden. Um die Fixierung der Gewebematte mit dem Winkelprofil durch Formschluss zu verbessern, kann diese daher in die hakenförmigen Vorsprünge eingreifen. Da die größten Spannungen direkt in der Ecke einer Wand auftreten, ist es besonders vorteilhaft, die hakenförmigen Vorsprünge innerhalb des Aufnahmeraums vorzusehen.

Zur Verbesserung der Fixierung der Gewebematte an dem Winkelprofil ist nach der Erfindung vorgesehen, dass der Aufnahmeraum mit der eingesetzten Gewebematte mit einem Füllelement versehen ist. Hierdurch kann ein besonders stabiler Eckwinkel erreicht werden. Durch das Füllelement ist die Gewebematte materialschlüssig und/oder formschlüssig mit dem Winkelprofil verbunden. Somit können auch größere Spannungen in der Gebäudewand von dem Gewebe aufgenommen werden, ohne dass sich dieses vom Winkelprofil löst. Durch die vollständige Einbettung eines Teils der Gewebematte in dem Füllelement ist die Fixierung besonders fest. Um ein Lösen des gesamten Füllelements aus dem Aufnahmeraum zu verhindern, kann vorgesehen sein, dass der Aufnahmeraum nach innen eingeschnürt ist.

In einer vorteilhaften Ausgestaltung der Erfindung ist vorgesehen, dass das Füllelement ein extrudiertes Material, insbesondere Hart- oder Weich-PVC aufweist. Das Füllelement kann insbesondere aus dem gleichen Material wie das Winkelprofil oder aus einem anderen Material gebildet sein. Eine besonders innige Verbindung des Füllelements sowohl mit dem Winkelprofil als auch mit der Gewebematte kann dadurch erreicht werden, dass das Füllelement mit dem Winkelprofil koextrudiert wird.

Eine bevorzugte Weiterentwicklung des Füllelements besteht darin, dass das Füllelement ein vorgefertigter Materialstreifen ist. Dieser kann eine feste Profilleiste, beispielsweise eine PVC-Leiste, oder auch eine Schnur sein. Zur Fixierung der Gewebematte ist der Materialstreifen in den Aufnahmeraum eingepresst.

Eine weitere Verbesserung der Verbindung der Gewebematte mit dem Winkelprofil wird dadurch erreicht, dass die Gewebematte an den Schenkeln des Winkelprofils fixiert, insbesondere verklebt ist. Hierdurch wird eine zusätzliche Stabilität des Eckprofils erreicht.

Nach der Erfindung ist weiterhin vorgesehen, dass die Schenkel des Winkelprofils Löcher aufweisen. Die Löcher stellen eine Verbindung bzw. Vermittlung zwischen der Oberfläche, auf die das Winkelprofil aufgesetzt ist, und der aufzubringenden Putzschicht dar. Somit kann eine Klebeschicht oder Spachtelmasse durch die Löcher von innen nach außen sowie Putz von außen nach innen gelangen, wodurch der Eckwinkel besonders sicher fixiert ist.

Eine Weiterbildung des erfindungsgemäßen Eckwinkels ist dadurch gegeben, dass das Winkelprofil ein extrudiertes Material aufweist. Die Fertigung des Winkelprofils aus einem extrudierten Material macht den Eckwinkel besonders wirtschaftlich. Ein Winkelprofil aus einem extrudierten Material ist besonders dann bevorzugt, wenn das Füllelement ebenfalls ein extrudierbares Material aufweist.

Des Weiteren ist bevorzugt, dass die Oberfläche der Außenseite des Winkelprofils durch Strukturierung, insbesondere Profilierung in Form von Längsrillen, vergrößert ist, um eine noch bessere Verkrallung der aufliegenden Putzschicht (Putz- oder Mörtelmasse) mit dem Winkelprofil zu erreichen. Auf diese Weise kann mit verringertem Materialeinsatz ein gleichstabiles Winkelprofil hergestellt werden. Dies führt zu einer Senkung der Herstellungskosten.

Das Verfahren zur Herstellung eines Eckwinkels ist im Anspruch 13 definiert.

Dabei ist vorgesehen, dass ein Teil der Gewebematte in einem im Eckbereich des Winkelprofils ausgebildeten Aufnahmeraum angeordnet wird und dass der Aufnahmeraum mit der eingesetzten Gewebematte mit einem Füllelement versehen wird. Hierdurch ergeben sich die oben beschriebenen Vorteile bezüglich der Stabilität des Eckwinkels. Das Füllelement kann eine starre Leiste oder eine flexible Schnur sein.

Gemäß der Erfindung ist vorgesehen, dass das Winkelprofil in einem Extrusionsverfahren hergestellt wird, dass anschließend ein Teil der Gewebematte in dem Aufnahmeraum angeordnet wird und dass das Füllelement in den Aufnahmeraum koextrudiert wird. So ergibt sich ein besonders wirtschaftliches Verfahren. Dabei ist es besonders bevorzugt, dass der Teil der Gewebematte in den Aufnahmeraum eingebracht wird, nachdem das Winkelprofil so weit erkaltet ist, dass es formstabil ist, jedoch bevor es vollständig erkaltet ist. Um eine gute Verbindung des Füllelements mit dem Winkelprofil zu erhalten, wird das Winkelprofil nach Einlegen der Gewebematte erneut erwärmt und dann das Füllelement in einem pastösen oder schmelzflüssigen Zustand in den Aufnahmeraum extrudiert. Für die Extrusion des Füllelements kann insbesondere die gleiche Vorrichtung wie für die Extrusion des Winkelprofils verwendet werden.

Die Erfindung wird weiter anhand von bevorzugten Ausführungsformen, welche in den beiliegenden Figuren schematisch dargestellt sind, erläutert.

In den Figuren zeigt:
- Fig. 1: eine erste Ausführungsform eines erfindungsgemäßen Eckwinkels,
- Fig. 2: eine zweite Ausführungsform eines erfindungsgemäßen Eckwinkels;
- Fig. 3: eine dritte Ausführungsform eines erfindungsgemäßen Eckwinkels;
- Fig. 4: eine vierte Ausführungsform eines erfindungsgemäßen Eckwinkels;
- Fig. 5: eine fünfte Ausführungsform eines erfindungsgemäßen Eckwinkels;
- Fig. 6: eine sechste Ausführungsform eines erfindungsgemäßen Eckwinkels;
- Fig. 7: eine siebte Ausführungsform eines erfindungsgemäßen Eckwinkels;
- Fig. 8: eine achte Ausführungsform eines erfindungsgemäßen Eckwinkels;
- Fig. 9: eine neunte Ausführungsform eines erfindungsgemäßen Eckwinkels;
- Fig. 10: eine zehnte Ausführungsform eines erfindungsgemäßen Eckwinkels;
- Fig. 11: eine elfte Ausführungsform eines erfindungsgemäßen Eckwinkels;
- Fig. 12: eine zwölfte Ausführungsform eines erfindungsgemäßen Eckwinkels;
- Fig. 13: eine dreizehnte Ausführungsform eines erfindungsgemäßen Eckwinkels;
- Fig. 14: eine dreizehnte Ausführungsform eines erfindungsgemäßen Eckwinkels;
- Fig. 15: einen Eckwinkel nach dem Stand der Technik.

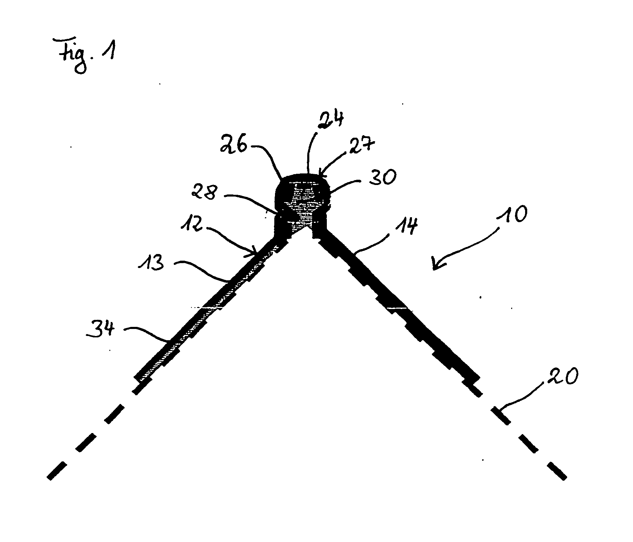

Gemäß Fig. 1 ist ein Eckwinkel 10 zumindest aus einem Winkelprofil 12 und einer Gewebematte 20 gebildet. Das Winkelprofil 12 weist einen ersten Schenkel 13 und einen zweiten Schenkel 14 auf, die im Wesentlichen rechtwinklig zueinander angeordnet sind. Die Breite der Schenkel 13 und 14 beträgt etwa 2 bis 3 cm. Im Eckbereich der beiden Schenkel 13 und 14 ist ein als Abzugskante ausgebildeter Vorsprung angeordnet. Dieser ist als Auswölbung 26 ausgebildet, welche mit den beiden Schenkeln 13 und 14 eine Einheit bildet. Die Auswölbung 26 hat einen etwa U-förmigen Querschnitt und weist eine entsprechend gekrümmte Außenfläche 27 auf. Im Inneren der Auswölbung 26 ist ein Aufnahmeraum 24 ausgebildet, durch den die Gewebematte 20 schlaufenartig geführt ist. Die Gewebematte 20 liegt dabei im Wesentlichen an einer Innenfläche der Auswölbung 26 an. Zur materialschlüssigen Fixierung der Gewebematte 20 in dem Aufnahmeraum 24 ist dieser mit einem Füllelement 30 verfüllt, in welchem der schlaufenartige Teil der Gewebematte 20 vollständig aufgenommen bzw. eingebettet ist. Das Füllelement 30 wurde mittels Koextrusion in den Aufnahmeraum 24 eingebracht. Die Gewebematte 20 ist außerdem durch einen hakenartigen Vorsprung 28, welcher als etwa dreieckförmige Nase ausgebildet ist, in dem Aufnahmeraum 24 formschlüssig gehalten. Zur zusätzlichen Fixierung der Gewebematte 20 an dem Winkelprofil 12 ist die Gewebematte 20 durch eine Klebstoffschicht 34 innenseitig an dem ersten Schenkel 13 des Winkelprofils 12 verklebt.

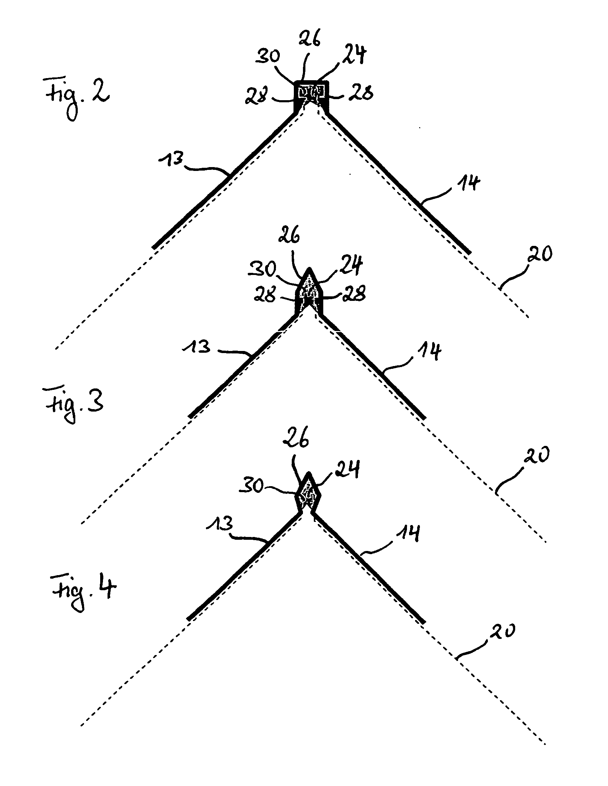

Fig. 2 zeigt eine weitere Ausführungsform des erfindungsgemäßen Eckwinkels 10. Im Unterschied zur in Fig. 1 dargestellten Ausführungsform ist die Auswölbung 26 als U-Profil mit im Wesentlichen eckigen Kanten ausgebildet. Im Inneren des U-Profils ist ein hakenartiger Vorsprung 28 ausgebildet, welcher die Gewebematte fixiert.

Der in Fig. 3 dargestellte Eckwinkel 10 weist eine Auswölbung 26 auf, die im Querschnitt pfeilförmig ausgebildet ist. Die Auswölbung 26 kann auch als Rinne bezeichnet werden, dessen Seitenwandungen parallel verlaufen und dessen Bodenbereich eine dreieckförmige Spitze bildet. An den beiden Seitenwandungen sind hakenförmige Vorsprünge 28 ausgebildet.

Fig. 4 zeigt eine weitere alternative Ausführungsform eines erfindungsgemäßen Eckwinkels 10. Der Querschnitt der Auswölbung 26 ist in der Form eines an einer Spitze offenen Parallelogramms, insbesondere einer Raute, ausgebildet. Diese Form eignet sich insbesondere zur Verwendung in Verbindung mit einer festen Profilleiste als Füllelement 30, da die Außenkontur der Auswölbung 26 ein Herauslösen der Profilleiste verhindert.

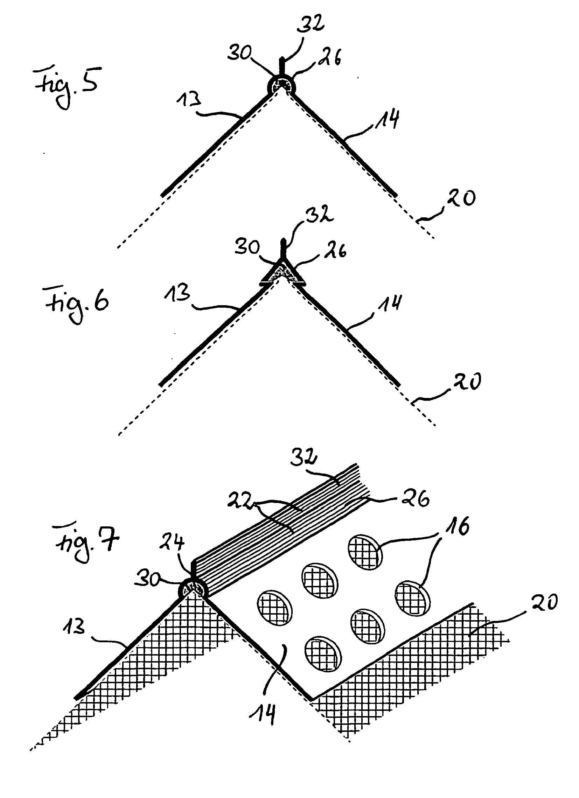

In Fig. 5 ist ein Eckwinkel 10 mit einer Auswölbung 26 in Form eines Dreiviertelkreises gezeigt. In der Mitte des Dreiviertelkreises ist außen ein als Abzugskante ausgebildeter Steg 32 angeordnet. Der Steg 32 ist symmetrisch zu den beiden Schenkeln 13, 14 und weist in seinem Endbereich eine Spitze auf, dessen Schenkel parallel zu den Schenkeln 13, 14 des Winkelprofils 12 verlaufen.

Der Eckwinkel 10 aus Fig. 6 weist eine dreieckförmige Auswölbung 26 auf. An der Spitze der dreieckförmigen Auswölbung 26 ist ein nach außen weisender Steg 32 vorgesehen, welcher symmetrisch zu beiden Schenkeln 13, 14 des Winkelprofils 12 verläuft.

Fig. 7 zeigt in schematischer Weise eine perspektivische Ansicht eines erfindungsgemäßen Eckwinkels 10. Im Querschnitt ist der Eckwinkel 10 wie der in Fig. 5 gezeigte Eckwinkel aufgebaut. Die Schenkel 13, 14 weisen zur Verbesserung der Fixierung auf einer Klebe- oder Spachtelschicht Löcher 16 auf. Zur Erzielung einer verbesserten Haftung einer außen auf dem Winkelprofil 12 aufzubringenden Putzschicht, welche aufgrund der innen liegenden Gewebematte 20 direkt auf dem Winkelprofil 12 aufliegt, ist das Winkelprofil 12 im Bereich der Auswölbung 26 und des Steges 32 mit Längsrillen 22 versehen.

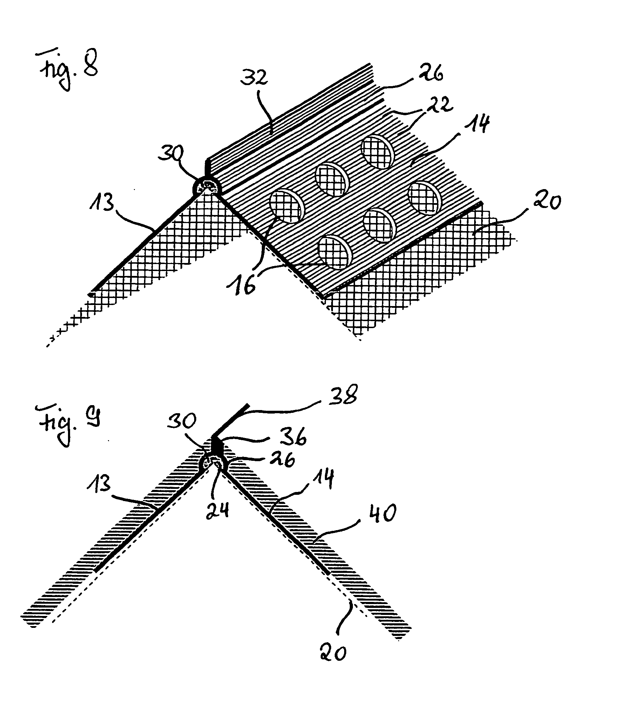

Fig. 8 zeigt im Wesentlichen den in Fig. 7 dargestellten Eckwinkel 10, wobei hier auch die Schenkel 13, 14 mit Längsrillen 22 versehen sind.

In Fig. 9 ist in schematischer Darstellung ein Eckwinkel 10 mit einer darauf aufgebrachten Putzschicht 40 gezeigt. Der Eckwinkel 10 weist eine Auswölbung 26 in Form eines Dreiviertelkreises auf. In der Auswölbung 26 ist ein Aufnahmeraum 24 gebildet, welcher mit einem Füllelement 30 verfüllt ist. Außen an der Auswölbung 26 ist ein als Abzugskeil 36 ausgebildeter Steg angeordnet. Eine keilförmige Kante verläuft parallel zu dem Schenkel 14 des Winkelprofils 12. An der Spitze des Abzugskeils 36 ist ein als Tropfkante ausgebildeter Fortsatz 38 vorgesehen, welcher parallel zu dem Schenkel 13 des Winkelprofils 12 verläuft. Der Fortsatz 38 dient beim Auftragen einer Putzschicht 40 einem korrekten Abziehen der Putzoberfläche, beispielsweise mit einer Glättkelle. Der Abzugskeil 36 dient in gleicher Weise dem korrekten Abziehen der Putzoberfläche über dem Schenkel 14. Im Einsatz des Eckwinkels 10 dient die Tropfkante dazu, dass Wasser schnell und sauber, beispielsweise von einer Balkondecke, abtropfen kann.

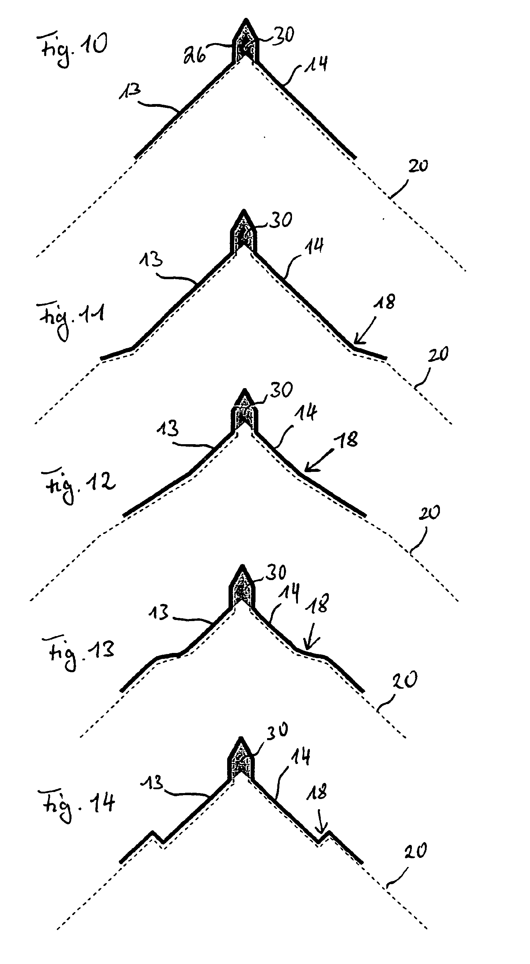

Fig. 10 zeigt einen Eckwinkel 10, der im Wesentlichen dem in Fig. 3 dargestellten Eckwinkel entspricht, wobei kein Vorsprung 28 vorgesehen ist.

In den Figuren 11 bis 14 sind Abwandlungen des in Fig. 10 dargestellten Eckwinkels 10 gezeigt, die sich auf die Ausgestaltung der Schenkel 13, 14 des Winkelprofils 12 beziehen. Die beiden Schenkel 13, 14 weisen eine Abknickung 18 auf, dessen Knickkante in Längsrichtung, das heißt parallel zu der als Abzugskante ausgebildeten Auswölbung 26 verläuft. Die Abknickung 18 dient dazu, die innen an den Schenkeln 13, 14 anliegende Gewebematte 20 in einen äußeren Bereich einer Putzschicht 40 zu bringen. Insbesondere ist vorgesehen, dass die Gewebematte 20 durch die Abknickung in ein äußeres Drittel einer Putzschicht 40 geführt wird.

Der in Fig. 12 gezeigte Eckwinkel 10 weist eine Abknickung 18 auf, die im Vergleich zu in Fig. 11 gezeigten Abknickung flacher verläuft.

Bei dem in Fig. 13 dargestellten Eckwinkel 10 ist die Abknickung S-förmig ausgebildet. Ein erster, innenliegender Bereich der Schenkel 13, 14 verläuft dabei parallel zu einem zweiten, außen liegenden Bereich der Schenkel 13, 14. Durch diese Form kann in besonders vorteilhafter Weise die Gewebematte 20 in einen äußeren Bereich einer Putzschicht 40 geführt werden, wobei die Gewebematte 20 in der Putzschicht dann erneut parallel zu den Schenkeln 13, 14 bzw. einer Putzschichtoberfläche verläuft.

In Fig. 14 ist ein Eckwinkel 10 dargestellt, welcher an den Schenkeln 13, 14 jeweils eine Z-förmige Abknickung 18 aufweist. Es ergeben sich die gleichen Vorteile wie bei dem in Fig. 13 gezeigten Eckwinkel 10.

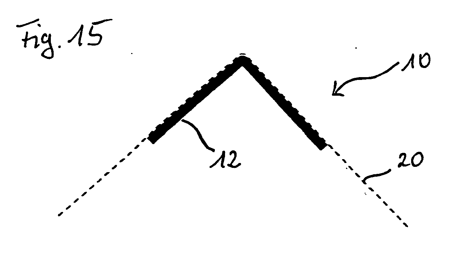

Fig. 15 zeigt einen Eckwinkel 10 nach dem Stand der Technik, bei dem eine Gewebematte 20 an den Außenflächen eines Winkelprofils 12 angeordnet, insbesondere verklebt ist.

## Patentansprüche

1. Eckwinkel (10) zur Kantenbewehrung, mit
- einem Winkelprofil (12) mit zwei Schenkeln (13, 14), welche abgewinkelt zueinander angeordnet sind und mehrere Löcher (16) aufweisen, durch welche eine aufzubringende Putzschicht von außen nach innen zu einer Oberfläche, auf die das Winkelprofil aufsetzbar ist, gelangen kann, und
- mindestens einer Gewebematte (20), die innen an dem Winkelprofil (12) angeordnet ist, mit dem Winkelprofil (12) verbunden ist und über dessen Schenkel (13, 14) hinausragt,
**dadurch gekennzeichnet,**
**dass** im Eckbereich des Winkelprofils (12) ein Aufnahmeraum (24) ausgebildet ist, in welchem ein Teil der Gewebematte (20) aufgenommen ist, und
**dass** der Aufnahmeraum (24) mit der eingesetzten Gewebematte (20) zur Fixierung der Gewebematte (20) an dem Winkelprofil (12) mit einem Füllelement (30) versehen ist.

2. Eckwinkel (10) nach Anspruch 1,
**dadurch gekennzeichnet,**
**dass** mindestens ein Schenkel (13, 14) mindestens eine Abknickung (18) oder Abbiegung aufweist.

3. Eckwinkel (10) nach Anspruch 1 oder 2,
**dadurch gekennzeichnet,**
**dass** der Aufnahmeraum (24) etwa U-förmig ausgebildet ist.

4. Eckwinkel (10) nach einem der Ansprüche 1 bis 3,
**dadurch gekennzeichnet,**
**dass** der Aufnahmeraum (24) in einer Auswölbung (26) angeordnet ist, welche als Abzugskante ausgebildet ist.

5. Eckwinkel (10) nach einem der Ansprüche 1 bis 4,
**dadurch gekennzeichnet,**
**dass** der Aufnahmeraum (24) zur Fixierung der Gewebematte (20) mindestens einen Vorsprung (28) aufweist.

6. Eckwinkel (10) nach einem der Ansprüche 1 bis 5,
**dadurch gekennzeichnet,**
**dass** das Füllelement (30) ein extrudiertes Material, insbesondere Hart- oder Weich-PVC aufweist.

7. Eckwinkel (10) nach einem der Ansprüche 1 bis 6,
**dadurch gekennzeichnet,**
**dass** das Füllelement (30) einen vorgefertigten Materialstreifen aufweist.

8. Eckwinkel (10) nach einem der Ansprüche 1 bis 7,
**dadurch gekennzeichnet,**
**dass** die Gewebematte (20) an den Schenkeln (13, 14) des Winkelprofils (12) fixiert, insbesondere verklebt ist.

9. Eckwinkel (10) nach einem der Ansprüche 1 bis 8,
**dadurch gekennzeichnet,**
**dass** das Winkelprofil (12) ein extrudiertes Material aufweist.

10. Eckwinkel (10) nach einem der Ansprüche 4 bis 9,
**dadurch gekennzeichnet,**
**dass** die Auswölbung (26) außen einen Steg (32) aufweist.

11. Eckwinkel (10) nach Anspruch 10,
**dadurch gekennzeichnet,**
**dass** an dem Steg (32) ein als Tropfkante ausgebildeter Fortsatz (38) angeordnet ist.

12. Eckwinkel nach einem der Ansprüche 1 bis 11,
**dadurch gekennzeichnet,**
**dass** das Winkelprofil (12) in einem Extrusionsverfahren hergestellt werden ist und
**dass** das Füllelement (30) in den Aufnahmeraum (24) hinein koextrudiert werden ist.

13. Verfahren zur Herstellung eines Eckwinkels (10), insbesondere nach einem der Ansprüche 1 bis 12,
bei dem ein Winkelprofil (12) mit zwei Schenkeln (13, 14) mit mindestens einer Gewebematte (20) verbunden wird und die Gewebematte (20) innen an dem Winkelprofil (12) angeordnet wird,
**dadurch gekennzeichnet,**
**dass** das Winkelprofil (12) in einem Extrusionsverfahren hergestellt wird,
**dass** anschließend ein Teil der Gewebematte (20) in einem im Eckbereich des Winkelprofils (12) ausgebildeten Aufnahmeraum (24) angeordnet wird und dass der Aufnahme raum (24) mit ter eingesetzten Gewebematte (20) mit einem Füllelement (30) versehen wird, wobei das Füllelement (30) in den Aufnahmeraum (24) hinein koextrudiert wird.

## Claims

1. Corner bead (10) for edge reinforcement, with
- an angle profile (12) with two legs (13, 14), which are arranged at an angle to each other and have several holes (16), through which a plaster layer to be applied can get from the outside to the inside towards a surface onto which the angle profile can be placed, and
- at least one fabric mat (20), which is arranged on the interior of the angle profile (12), is connected to the angle profile (12) and projects beyond its leg (13, 14),
**characterized in that**
in the corner area of the angle profile (12) an accommodating space (24) is designed, in which a part of the fabric mat (20) is accommodated, and
**in that** for fixation of the fabric mat (20) on the angle profile (12) the accommodating space (24) with the inserted fabric mat (20) is provided with a filling element (30).

2. Corner bead (10) according to claim 1,
**characterized in that**
at least one leg (13, 14) has at least one kink (18) or bend.

3. Corner bead (10) according to claim 1 or 2,
**characterized in that**
the accommodating space (24) is of approximately U-shaped design.

4. Corner bead (10) according to any one of claims 1 to 3,
**characterized in that**
the accommodating space (24) is arranged in a bulge (26) which is designed as a smoothing-off edge.

5. Corner bead (10) according to any one of claims 1 to 4,
**characterized in that**
the accommodating space (24) has at least one projection (28) for fixation of the fabric mat (20).

6. Corner bead (10) according to any one of claims 1 to 5,
**characterized in that**
the filling element (30) has an extruded material, in particular unplasticized or plasticized PVC.

7. Corner bead (10) according to any one of claims 1 to 6,
**characterized in that**
the filling element (30) has a prefabricated material strip.

8. Corner bead (10) according to any one of claims 1 to 7,
**characterized in that**
the fabric mat (20) is fixed, in particular bonded to the legs (13, 14) of the angle profile (12).

9. Corner bead (10) according to any one of claims 1 to 8,
**characterized in that**
the angle profile (12) has an extruded material.

10. Corner bead (10) according to any one of claims 4 to 9,
**characterized in that**
the bulge (26) has a ridge (32) on the outside.

11. Corner bead (10) according to claim 10,
**characterized in that**
on the ridge (32) an extension (38) designed as a drip edge is arranged.

12. Corner bead (10) according to any one of claims 1 to 11,
**characterized in that**
the angle profile (12) has been produced in an extrusion method and **in that** the filling element (30) has been co-extruded into the accommodating space (24).

13. Method for producing a corner bead (10), in particular according to any one of claims 1 to 12,
in which an angle profile (12) with two legs (13, 14) is connected to at least one fabric mat (20) and the fabric mat (20) is arranged on the interior of the angle profile (12),
**characterized in that**
the angle profile (12) is produced in an extrusion method,
**in that** subsequently a part of the fabric mat (20) is arranged in an accommodating space (24) designed in the corner area of the angle profile (12) and **in that** the accommodating space (24) with the inserted fabric mat (20) is provided with a filling element (30), wherein the filling element (30) is co-extruded into the accommodating space (24).

## Revendications

1. Cornière (10) pour renforcer les angles, avec
- un profilé angulaire (12) à deux branches (13, 14) qui forment un angle l'une par rapport à l'autre et présentent plusieurs orifices (16) à travers lesquels une couche d'enduit à appliquer peut, depuis l'extérieur, parvenir à l'intérieur jusqu'à une surface sur laquelle le profilé angulaire peut être appliqué, et
- au moins un textile (20) qui est placé à l'intérieur sur le profilé angulaire (12), est relié au profilé angulaire (12) et dépasse de ses branches (13, 14),
**caractérisée en ce que**
dans la zone d'angle du profilé angulaire (12) est formé un logement (24) dans lequel est logée une partie du textile (20), et
**en ce que** le logement (24) avec le textile (20) inséré est muni d'un élément de remplissage (30) pour la fixation du tissu (20) sur le profilé angulaire (12).

2. Cornière (10) selon la revendication 1, **caractérisée en ce qu'**au moins une branche (13, 14) présente au moins un coude (18) ou un pliage.

3. Cornière (10) selon la revendication 1 ou 2, **caractérisée en ce que** le logement (24) est réalisé approximativement en forme de U.

4. Cornière (10) selon l'une des revendications 1 à 3, **caractérisée en ce que** le logement (24) est placé dans une partie bombée (26) qui est conformée en bord de lissage.

5. Cornière (10) selon l'une des revendications 1 à 4, **caractérisée en ce que** le logement (24) présente au moins une saillie (28) pour la fixation du textile (20).

6. Cornière (10) selon l'une des revendications 1 à 5, **caractérisée en ce que** l'élément de remplissage (30) présente un matériau extrudé, en particulier du PVC dur ou tendre.

7. Cornière (10) selon l'une des revendications 1 à 6, **caractérisée en ce que** l'élément de remplissage (30) présente une bande de matière préfabriquée.

8. Cornière (10) selon l'une des revendications 1 à 7, **caractérisée en ce que** le textile (20) est fixé, en particulier collé, sur les branches (13, 14) du profilé angulaire (12).

9. Cornière (10) selon l'une des revendications 1 à 8, **caractérisée en ce que** le profilé angulaire (12) présente un matériau extrudé.

10. Cornière (10) selon l'une des revendications 4 à 9, **caractérisée en ce que** la partie bombée (26) présente une barre (32) à l'extérieur.

11. Cornière (10) selon la revendication 10, **caractérisée en ce qu'**un prolongement (38) conformé en larme est placé sur la barre (32).

12. Cornière (10) selon l'une des revendications 1 à 11, **caractérisée en ce que** le profilé angulaire (12) a été fabriqué par un procédé d'extrusion et **en ce que** l'élément de remplissage (30) a été coextrudé dans le logement (24).

13. Procédé de fabrication d'une cornière (10), en particulier selon l'une des revendications 1 à 12,
dans lequel un profilé angulaire (12) à deux branches (13, 14) est relié à au moins un textile (20) et le textile (20) est placé à l'intérieur sur le profilé angulaire (12),
**caractérisé en ce que** le profilé angulaire (12) est fabriqué par un procédé d'extrusion,
**en ce qu'**ensuite, une partie du textile (20) est placée dans un logement (24) formé dans la zone d'angle du profilé angulaire (12), et
**en ce que** le logement (24) avec le textile (20) inséré est muni d'un élément de remplissage (30), l'élément de remplissage (30) étant coextrudé à l'intérieur du logement (24).
